# EUROPÄISCHE PATENTSCHRIFT

(11) **EP 0 397 018 B1**
(45) Veröffentlichungstag und Bekanntmachung des Hinweises auf die Patenterteilung: **26.01.1994**
(21) Anmeldenummer: 90108299.0
(22) Anmeldetag: 02.05.1990
(51) Int. Cl.: F16D 65/12

(54) **Bremsring-Naben-Verbindung mittels Klemmnuten**
Brake ring / hub junction by cramping grooves
Jonction bague de frein / moyeu par rainures de serrage

(30) Priorität: 11.05.1989 DE 3915415
(43) Veröffentlichungstag der Anmeldung: 14.11.1990
(73) Patentinhaber: Bergische Stahl-Industrie, D-42859 Remscheid (DE)
(72) Erfinder:
(74) Vertreter: Dahlkamp, Heinrich-Leo

(56) Entgegenhaltungen:
- DE-C- 1 222 962
- DE-C- 2 742 468

## Beschreibung

Die Erfindung betrifft eine Bremsring-Naben-Verbindung mittels Klemmnuten bei Schienenfahrzeugen, wobei die Nabe mind. drei radial zwischen Klemmarme sich erstreckende Klemmnuten trägt, in die die an den Bremsringen angeordneten Klemmleisten eingepresst sind und die Nabe auf die Achswelle aufgepresst ist.

Diese Art der Verbindung von Bremsring und Nabe oder Welle wurde erstmals im DE-PS 1 222 962 vorgeschlagen und hat sich weltweit bewährt, da es einige wesentliche Vorteile besitzt. Dazu gehört vor allem, dass trotz der starken Klemmung der Klemmleisten in der Klemmnut eine radiale Ausdehnung des Bremsrings infolge der Erwärmung beim Bremsen möglich ist, weil die Klemmleiste in der Klemmnut wandern kann, ohne dass gefährliche Spannungen auftreten können, die eine Lösung der Klemmverbindung ergeben.

Da aber die Beanspruchungen im Eisenbahnverkehr immer grösser wurden, weil die Schienenfahrzeuge auf schlechten Gleisen fahren mussten und/oder höhere Geschwindigkeiten fuhren, wurde die Klemmkraft einerseits und die Ertragbarkeit der Klemmarme andererseits so gross gemacht, dass weder ein Abheben der Klemmleiste auf der in Drehrichtung gesehenen Rückseite erfolgt noch ein plastisches Aufbiegen des im Kontakt mit der Klemmleiste stehennden Klemmarmes der Klemmnut erfolgt. Es kam deshalb zu dem DE-PS 27 42 468, bei dem durch eine bestimmte Form der Klemmnut und Härtung der Klemmnut-Innenfläche ein schneller Verschleiss der Klemmflächen verhindert wird und wobei sich im Breich der Halbzylinder-Bodenfläche der Klemmnut beim Einpressen der Klemmleiste in die Klemmnut Spannungen mit gleichmässigem Verlauf bilden, woraus dann eine grössere Klemmkraft an den Klemmflächen resultiert. Das gehärtete Materialvolumen, welches sich aus der Halbzylinder-Bodenfläche der Klemmnut und der Tiefe der gehärteten Schicht ergibt und Druckeigenspannungen aufweist, dient zur Aufnahme der Bremsbetriebsbeanspruchung, wobei gegen diese Beanspruchung eine grössere Ertragbarkeit der Klemmverbindung gegeben ist als b ei der eingangs genannten Bauweise nach DE-PS 1 222 962.

Inzwischen haben sich die Beanspruchungen und Anforderungen an Bremsen und Fahrwerk wiederum erheblich gesteigert. Die Klemmverbindungen zwischen Bremsring und Nabe werden zunehmend höher beansprucht. Dabei muss die Klemmkraft einerseits und die Ertragbarkeit der Arme der Klemmverbindung andererseits gegenüber den angreifenden Kräften so gross sein, dass weder ein Abheben der Führungsleiste bzw. Klemmleiste auf der in Drehrichtung gesehenen Rückseite erfolgt, noch ein plastisches Aufbiegen des im Kontakt mit der Führungsleiste bzw. Klemmleiste stehenden Armes der Klemmnut stattfindet. Bei den aus den vorgenannten Beanspruchungen herrührenden Belastungen handelt es sich um Äquivalenzkräfte, die zum Beispiel aus den Vertikalbeschleunigungen resultieren, die auf die Klemmverbindungen einwirken. Ist die Ertragbarkeit der Klemmverbindungen gegenüber diesen Kräften kleiner, so führ dies zum Verlust der Klemmkraft und die Bremsringe lösen sich von der Nabe in Drehrichtung. Wenn damit auch nicht die Sicherheit des Fahrzeugs beim Bremsen verloren geht, weil die Bremsscheibe noch funktionsfähig ist, so muss doch dieser Zustand vermieden werden, damit bei weiterer Benutzung dieser Bremsen keine unzulässigen Beschädigungen im Bremssystem ausgelöst werden.

Der vorliegenden Erfindung liegt daher die Aufgabe zugrunde, die bekannten Nachteile der bisher benutzten Bremsscheiben zu vermeiden und eine Verbindung zwischen Bremsring und Nabe zu schaffen, die auch den erhöhten Anforderungen des modernen Verkehrs standhalten und vor allem auch die relativ hohen Belastungen durch Vertikalbeschleunigungen vermeiden kann.

Die Lösung dieser Aufgabe besteht darin, dass der kleinste Nabenquerschnitt in der Klemmnut bei eingepresster Klemmleiste grösser ist als der Querschnitt der Klemmarme im festigkeitsmässig am höchsten beanspruchten Bereich und der Querschnitt der Nabe ausserhalb der Klemmarme mind. teilweise kleiner ist als der im Nutengrund vorhandene Querschnitt.

Vorteilhaft wird der Nutengrund von der Fläche eines Halbzylinders gebildet bzw. von teilweise geraden sowie tangential liegenden Bereichen und/oder konzentrisch parallel zur Nabenbohrung liegenden Bereichen.

Der Vorteil der erfindungsgemässen Ausbildung der Klemmnut besteht vor allem darin, dass auch bei sehr grosser Beanspruchung der Bremsscheibe die Verbindung der Klemmleiste mit der Klemmnut erhalten bleibt, ohne dass sich der Bremsring von der Nabe lösen kann. Ausserdem können die Klemmarme erheblich kürzer und der Querschnitt der Nabe erheblich kleiner gehalten werden, so dass sich eine grössere Reibfläche am Bremsring ergibt, weil der Bremsring breiter gehalten werden kann. Trotzdem ist die Haltbarkeit der Verbindung Bremsring-Nabe erheblich besser als bei der herkömmlichen Ausbildung der Klemmverbindung.

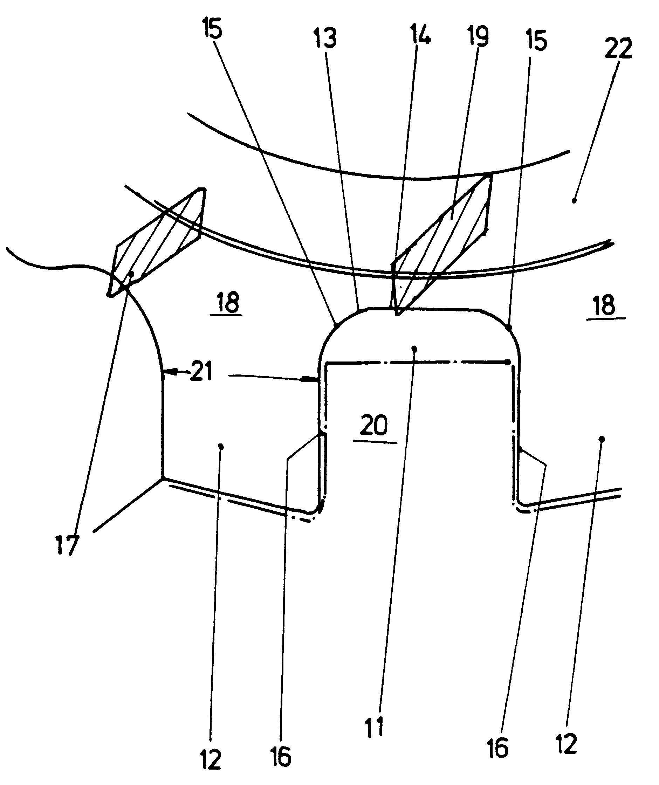

Die Zeichnung zeigt eine Seitenansicht einer erfindungsgemäss ausgebildeten Klemmnut 11, welche von den Klemmarmen 12 gebildet wird. Der Nutengrund 13 wird von einem geraden und tangential liegenden Bereich 14 gebildet, wobei dieser Bereich 14 mit symmetrisch liegenden Kreisbögen 15 in die Klemmflächen 16 der Klemmarme 12 übergeht. Ausserhalb der Klemmarme 12 ist der Querschnitt 17 der Nabe 18 kleiner als der im Nutengrund 13 liegende Querschnitt 19. Dieser Nabenquerschnitt 19 im Nutengrund 13, welcher der kleinste Querschnitt ist, ist bei eingepresster Klemmleiste 20 grösser als der Querschnitt 21 der Klemmarme 12 in deren festigkeitsmässig am höchsten beanspruchten Bereich. Es kann sich als zweckmässig erweisen, den Nutengrund in Form einer Halbzylinderfläche auszubilden und die Innenflächen der Klemmnut 11 gleichmässig oberflächen zu härten und anschliessend bei etwa 200°C anzulassen. Die Tiefe der gehärteten Schicht soll nicht mehr als 5 mm betragen.

Bei der Benutzung der Nabe nach der Erfindung für die Befestigung einer Bremsscheibe auf einer Achswelle wird zuerst die Nabe 18 auf die als Hohlrohr ausgebildete Achswelle 22 aufgepresst, wobei das Übermass der Welle 22 so gewählt wird, dass in keinem Querschnitt der Nabe 18 eine plastische Verformung stattfindet. Damit aber sicher eine Verformung in der Nut 11 vermieden wird muss der Querschnitt 17 der Nabe 18 mind. teilweise an einzelnen Stellen kleiner als der im Nutengrund 13 vorhandenen Querschnitt 19 sein. Nachdem die Nabe 18 auf die Welle 22 aufgebracht ist, kann der Bremsring mit den daran angeordneten Klemmleisten 20 (meist drei Stück) mit der Nabe 18 verbunden werden, indem die Klemmleisten 20 in die Klemmnut 11 eingepresst wird. Dabei ist das Übermass der Klemmleisten so zu berechnen, dass der im Nutengrund 13 liegende Teil der Nabe 18 nicht bleibend verformt wird. Dies wird dadurch erreicht, dass der kleinste Querschnitt 19 in der Klemmnut 11 bei eingepresster Klemmleiste 20 grösser ist als der Querschnitt 21 der Klemmarme 12 in deren festigkeitsmässig am höchsten beanspruchten Bereich. Dieser Bereich liegt etwa dort, wo die geraden Klemmflächen 16 enden. Eine Verbesserung lässt sich durch eine Härtung der Innenflächen in der Klemmnut 11 auf etwa 52 HRc und Anlassen bei 200°C und nicht tiefer als 5 mm erreichen, weil in den gehärteten Flächen Eigenspannungen vorliegen, gegen die die Betriebsspannungen wirken.

Im Nutengrund 13 kann auch ohne weiteres anstelle des geraden Bereichs 14 ein Bereich angeordnet sein, welcher teilweise aus einem geraden Bereich besteht und teilweise aus einem konzentrisch zur Nabenbohrung liegenden Bereich. Auch kann der gerade Bereich ohne weiteres aus einem konzentrisch zur Nabenbohrung liegenden Bereich bestehen.

Darüberhinaus kann man den Klemmarmen 12 andere geeignete Formen geben, wobei nur darauf geachtet werden muss, dass der kleinste Nabenquerschnitt 19 in der Klemmnut 11 bei eingepresster Klemmleiste 20 grösser ist als der Querschnitt 21 der Klemmarme 12 in deren festigkeitsmässig am höchsten beanspruchten Bereich.

## Patentansprüche

1. Bremsring-Naben-Verbindung mittels Klemmnuten bei Schienenfahrzeugen, wobei die Nabe mindestens drei radial zwischen Klemmarme sich erstreckende Klemmnuten trägt, in die die an den Bremsringen angeordneten Klemmleisten eingepresst sind und die Nabe auf die Achswelle aufgepresst ist, dadurch gekennzeichnet, dass der kleinste Nabenquerschnitt (19) in der Klemmnut (11) bei eingepresster Klemmleiste (20) grösser ist als der Querschnitt (21) der Klemmarme (12) im festigkeitsmässig am höchsten beanspruchten Bereich und der Querschnitt (17) der Nabe (18) ausserhalb der Klemmarme (12) mind. teilweise kleiner ist als der im Nutengrund (13) vorhandene Querschnitt (19).

2. Bremsring-Naben-Verbindung nach Anspruch 1, dadurch gekennzeichnet, dass der Nutengrund (13) von der Fläche eines Halbzylinders gebildet wird bzw. teilweise gerade sowie tangential liegende Bereiche (14) und/oder konzentrisch parallel zue Nabenbohrung liegende Bereiche aufweist.

3. Bremsring-Naben-Verbindung nach Anspruch 1 oder 2, dadurch gekennzeichnet, dass die gesamte Innenfläche (14,15,16) der Klemmnut (11) gleichmässig oberflächengehärtet ist und anschliessend bei 200°C auf eine Härte von ca. 52 HRc angelassen wird, wobei die Tiefe der gehärteten Schicht mind. 1 mm, jedoch nicht mehr als 5 mm beträgt.

## Claims

1. Connection between brake ring and hub by means of clamping grooves in rail vehicles, the hub having at least three radially extending clamping grooves between clamping arms, the clamping strips arranged on the brake rings being pressed into these clamping grooves and the hub being pressed onto the axle shaft, characterised in that with the clamping strip (20) pressed in, the smallest hub cross-section (19) in the clamping groove (11) is larger than the cross-section (21) of the clamping arms (12) in the region most highly loaded with respect to strength and at least part of the cross-section (17) of the hub (18) outside the clamping arms (12) is smaller than the cross-section (19) present in the groove bottom (13).

2. Connection between brake ring and hub according to Claim 1, characterised in that the groove bottom (13) is formed by the surface of a half-cylinder and, in part, by straight and tangentially located regions (14) and/or regions located concentrically with and parallel to the hub bore.

3. Connection between brake ring and hub according to Claim 1 or 2, characterised in that the complete inner surface (14, 15, 16) of the clamping groove (11) is uniformly surface-hardened and is subsequently annealed at 200 °C to a hardness of approximately 52 Rockwell C, the depth of the hardened layer being at least 1 mm but not more than 5 mm.

## Revendications

1. Liaison bague de freinage-moyeu, par l'intermédiaire de rainures de serrage sur des véhicules sur rails, le moyeu comportant au moins trois rainures de serrage situées radialement entre des bras de serrage dans les rainures desquelles sont serrées par force des barres de serrage disposées sur des bagues de freinage et que le moyeu est serré par force sur l'arbre d'essieu, caractérisée par le fait que la plus petite coupe transversale du moyeu (19), dans la rainure de serrage (11), la barre de serrage (20) s'y trouvant serrée, est plus grande que la coupe transversale (21) des bras de serrage (12) dans la zone de sollicitation maximale de résistance et que la coupe transversale (17) du moyeu (18), extérieure aux bras de serrage (12) est au moins partiellement plus petite que la coupe transversale (19) existant au fond de la rainure (13).

2. Liaison bague de freinage-moyeu, suivant la revendication 1, caractérisée par le fait que le fond de la rainure (13) est constitué par la surface d'un demi-cylindre, présentant respectivement, soit des zones (14) partiellement droites, soit des zones situées tangentiellemt et/ou situées concentriquement et parallèles à l'alésage du moyeu.

3. Liaison bague de freinage-moyeu, suivant la revendication 1 ou 2, caractérisée par le fait que la totalité de la surface interne (14,15,16) de la rainure de serrage (11) est trempée superficiellement et revenue à une dureté d'env. 52 HRo, l'épaisseur de la couche trempée étant d'au moins 1 mm, sans dépasser 5 mm.
